# EUROPEAN PATENT SPECIFICATION

(11) **EP 4 282 625 B1**
(45) Date of publication and mention of the grant of the patent: **09.07.2025**
(21) Application number: 23175148.8
(22) Date of filing: 24.05.2023
(51) Int. Cl.: B29C 65/02, B29C 65/82, B29L 31/30

(54) **DESIGN AND CHARACTERIZATION METHOD OF WELDED JOINTS FOR THERMOPLASTIC COMPONENTS**
VERFAHREN ZUM ENTWURF UND ZUR CHARAKTERISIERUNG VON SCHWEISSVERBINDUNGEN FÜR THERMOPLASTISCHE KOMPONENTEN
PROCÉDÉ DE CONCEPTION ET DE CARACTÉRISATION DE JOINTS SOUDÉS POUR COMPOSANTS THERMOPLASTIQUES

(30) Priority: 24.05.2022 US 202217752161
(43) Date of publication of application: 29.11.2023
(73) Proprietor: Goodrich Corporation, Charlotte, NC 28217-4578 (US)
(72) Inventor: GURVICH, Mark R., Middletown, CT (US); WARD, Stephen H., Chula Vista, CA (US)
(74) Representative: Dehns

(56) References cited:
- US-A1- 2013 316 181
- US-A1- 2019 351 623
- US-A1- 2020 368 995

## Description

### TECHNICAL FIELD

The present disclosure relates to assemblies, systems and characterization methods of welded joints for thermoplastic components and, more particularly, to assemblies, systems and characterization methods of welded joints for thermoplastic components (e.g., thermoplastic-based fiber-reinforced composites) utilizing visualization agents (e.g., pigments and/or fluorescent agents).

### BACKGROUND

In general, the welding of thermoplastic components and/or thermoplastic-based fiber-reinforced composites can provide for efficient joining of separate thermoplastic parts with benefits of cost/labor reduction, technological convenience and/or opportunities to design and optimize complex-shape structures. However, in contrast with more traditional adhesion-based bonding of thermoplastic materials or composites, welding-based joining can be associated with through-thickness physical processes, resulting in complex interconnection areas between welded parts. Conventional practice provides almost non-existent or very limited visualization of the welded interconnection areas for thermoplastic components/composites. Thermoplastic component assemblies are disclosed in US 2013/316181 A1, US 2019/351623 A1 and US 2020/368995 A1.

### BRIEF DESCRIPTION

The present invention provides a thermoplastic component assembly as defined by claim 1 and a characterization method as defined by claim 8. Features or embodiments are defined in the dependent claims..

The above described and other features are exemplified by the following figures and detailed description.

### BRIEF DESCRIPTION OF THE DRAWINGS

Features and aspects of embodiments are described below with reference to the accompanying drawings, in which elements are not necessarily depicted to scale.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed assemblies, systems and methods, reference is made to the appended figures, wherein:
FIG. 1 is a through-thickness cross-sectional side view of an example thermoplastic component assembly, according to the present disclosure;
FIG. 2 is a through-thickness cross-sectional side view of another example thermoplastic component assembly, according to the present disclosure, according to the present disclosure;
FIG. 3 is a through-thickness cross-sectional side view of another example thermoplastic component assembly, according to the present disclosure;
FIG. 4 is a through-thickness cross-sectional side view of another example thermoplastic component assembly, according to the present disclosure;
FIG. 5 is a through-thickness cross-sectional side view of another example thermoplastic component assembly, according to the present disclosure;
FIG. 6 is a through-thickness cross-sectional side view of another example thermoplastic component assembly, according to the present disclosure;
FIG. 7 is a through-thickness cross-sectional side view of another example thermoplastic component assembly, according to the present disclosure;
FIG. 8 is a through-thickness cross-sectional side view of another example thermoplastic component assembly, according to the present disclosure;
FIG. 9 is a through-thickness cross-sectional side view of another example thermoplastic component assembly, according to the present disclosure; and
FIG. 10 is a side perspective view of another example thermoplastic component assembly, according to the present disclosure.

### DETAILED DESCRIPTION

The example embodiments disclosed herein are illustrative of assemblies for characterization of welded joints for thermoplastic components, and systems of the present disclosure and methods/techniques thereof. It should be understood, however, that the disclosed embodiments are merely examples of the present disclosure, which may be embodied in various forms. Presented examples show assemblies of two thermoplastic components, however, the same embodiments can be used for assemblies comprising more than two components. Therefore, details disclosed herein with reference to example assemblies for characterization of welded joints for thermoplastic components (e.g., thermoplastic-based fiber-reinforced composites) and associated processes/techniques of fabrication/assembly and use are not to be interpreted as limiting, but merely as the basis for teaching one skilled in the art how to make and use the assemblies/systems and/or alternative assemblies/systems of the present disclosure.

The present disclosure provides assemblies, systems and characterization methods of welded joints for thermoplastic components.

More particularly, the present disclosure provides assemblies, systems and characterization methods of welded joints for thermoplastic components (e.g., thermoplastic-based fiber-reinforced composites) utilizing visualization agents (e.g., pigments and/or fluorescent agents).

As noted above, current practice provides almost no or very limited visualization of the welded interconnection areas for thermoplastic components/composites. Understanding of actual physical processes in the welded interconnection areas and quantification of actual welded patterns through advanced visualization can be important for further optimization of welded processes and their cost-efficient mechanical characterization and quality inspection. For example, understanding and characterizing these interconnection areas between welded parts can be important for the acceleration of welding-based product development, the optimization of manufacturing processes, the identification of potential risks and their mitigations, and the reduction of conservatism in composite designs. In example embodiments, the present disclosure provides for assemblies, systems and characterization methods of welded joints for thermoplastic components (e.g., thermoplastic-based fiber-reinforced composites) with enhanced visualization, sufficient for qualitative and quantitative assessment of the welded interconnected areas.

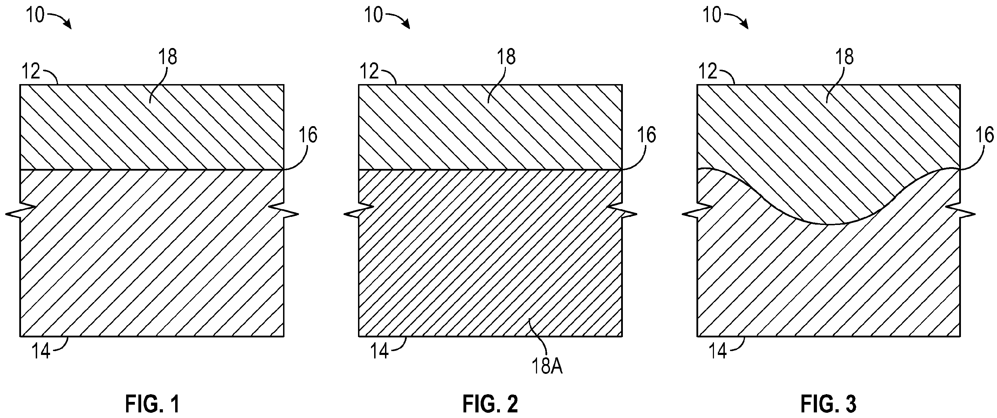

FIG. 1 is a through-thickness cross-sectional side view of a thermoplastic component assembly 10, according to certain embodiments of the present disclosure. In general, thermoplastic component assembly 10 includes a first thermoplastic component 12 and a second thermoplastic component 14.

First thermoplastic component 12 and second thermoplastic component 14 each include a thermoplastic polymer material. It is noted that the thermoplastic polymer material of the first thermoplastic component 12 can be the same as or different than the thermoplastic polymer material of the second thermoplastic component 14.

In some embodiments, the first thermoplastic component 12 and/or the second thermoplastic component 14 takes the form of a thermoplastic-based fiber-reinforced composite component 12, 14, (e.g., a thermoplastic material that includes fibers, such as reinforcing carbon, glass or organic (e.g., Kevlar) fibers, any of their combinations, or the like). The reinforcing fibers can be continuous fibers, short (chopped) fibers or organized as an interwoven fabric. The reinforcement layups can include, among others, laminated designs, comprising of sets of uni-directionally-reinforced or fabric plies, or 2D or 3D woven configurations.

In contrast with conventional practice where the boundary or interconnection area between welded parts can barely be seen, the present disclosure provides one or more visualization agents 18 (e.g., fluorescent agents 18) added to the thermoplastic polymer material or matrix of the first thermoplastic component 12 and the second thermoplastic component 14 to make the boundary or interconnection area 16 between welded components 12, 14 clearly observed and assessed. Fluorescent agents 18 and/or dyes that absorb UV light (e.g., around 350 nm wavelengths) and fluoresce in the visible spectrum are utilized to detect the clear boundary or interconnection area 16 between welded components 12, 14.

As shown in FIG. 1, the first thermoplastic component 12 can include the visualization agent 18 (e.g., bright pigment 18 and/or fluorescent agent 18) mixed with the polymer of the first thermoplastic component 12 for improved visual contrast of the boundary or interconnection area 16 between welded components 12, 14. It is noted that instead of or in addition to component 12, the second thermoplastic component 14 can include the visualization agent 18 (e.g., bright pigment 18 and/or fluorescent agent 18) mixed with the polymer of the second thermoplastic component 14 for improved visual contrast of the boundary or interconnection area 16 between welded components 12, 14.

It is noted that through-thickness cross-sectional side views or generated clear through-thickness views of assembly 10 as shown in FIGS. 3-5 can allow one to identify the type of interconnection areas 16 between welded components 12, 14.

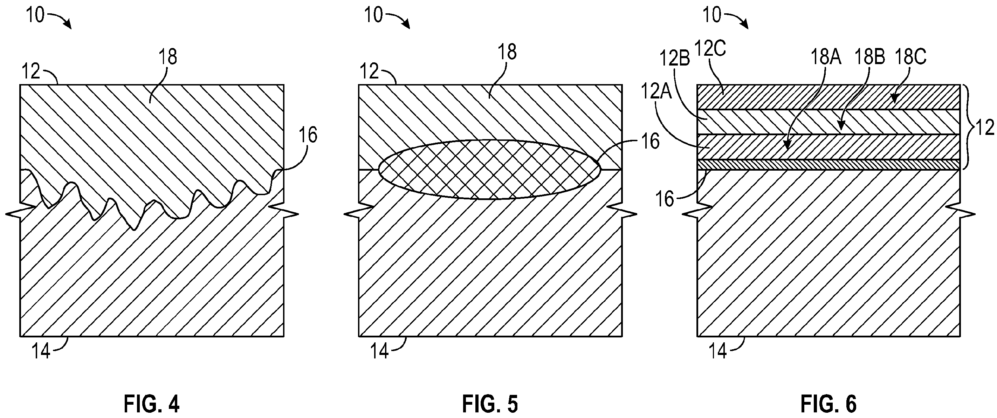

For example and as shown in FIGS. 3-5, the boundary or interconnection area 16 between welded components 12, 14 can be identified as a distinct monotonic boundary/area 16 between welded components 12, 14 (FIG. 3); or the area 16 between welded components 12, 14 can be identified as a distinct stochastic boundary/area 16 between welded components 12, 14 with a clear boundary 16 between components 12, 14 (FIG. 4); or the area 16 between welded components 12, 14 can be identified as a stochastic blurred interconnection area 16 between welded components 12, 14, with a mixture of the polymer from component 12 mixed with the polymer from component 14 mixed together in the boundary area 16 (FIG. 5). In addition to the different types of qualitative assessments as shown in FIGS. 3-5, it is noted that quantitative analysis of detected boundaries/areas 16 of welded components 12, 14 can be performed using measurements by typical image-processing techniques/capabilities or the like.

FIG. 2 is a through-thickness cross-sectional side view of another thermoplastic component assembly 10. As shown in FIG. 2, the first thermoplastic component 12 includes a first visualization agent 18 (e.g., first bright pigment 18 and/or first fluorescent agent 18) mixed with the polymer of the first thermoplastic component 12, and the second thermoplastic component 14 includes a second visualization agent 18A (e.g., second bright pigment 18A and/or second fluorescent agent 18A) mixed with the polymer of the second thermoplastic component 14 to visually emphasize the boundary or interconnection area 16 between welded components 12, 14 (e.g., for improved visual contrast of the boundary or interconnection area 16 between welded components 12, 14).

FIG. 6 is a through-thickness cross-sectional side view of another thermoplastic component assembly 10 of the present disclosure. Thermoplastic component assembly 10 can include first thermoplastic component 12 and second thermoplastic component 14, with the first thermoplastic component 12 including a first thermoplastic layer 12A of component 12, a second thermoplastic layer 12B of component 12 and a third thermoplastic layer 12C of component 12. It is noted that the first thermoplastic component 12 can include any number of thermoplastic layers 12A, 12B, 12C, 12D, etc. (e.g., component 12 can include three layers 12A to 12C; component 12 can include four layers 12A to 12D; component 12 can include six layers 12A to 12F; etc.). It is also noted that the definition of example layers 12A, 12B, 12C, 12D, etc. can be based on specifics of a considered visualization objective and, for example, each layer 12A, 12B, etc. can comprise one or many individual fiber-reinforced plies in the case of laminated thermoplastic composites. Similarly, the number of layers with different visualization agents can be based on specifics of considered analysis and can comprise one, two, three, four or more separate thermoplastic layers.

As shown in FIG. 6, the first thermoplastic layer 12A includes a first visualization agent 18A (e.g., first bright pigment 18A and/or first fluorescent agent 18A) mixed with the polymer of the first thermoplastic component 12, and the second thermoplastic layer 12B includes a second visualization agent 18B (e.g., second bright pigment 18B and/or second fluorescent agent 18B) mixed with the polymer of the first thermoplastic component 12, and the third thermoplastic layer 12C includes a third visualization agent 18C (e.g., third bright pigment 18C and/or third fluorescent agent 18C) mixed with the polymer of the first thermoplastic component 12, to visually emphasize the boundary or interconnection area 16 between welded components 12, 14 (e.g., for improved visual contrast of the boundary or interconnection area 16 between welded components 12, 14). In certain embodiments, the first visualization agent 18A, the second visualization agent 18B and the third visualization agent 18C are all different from one another, although the present disclosure is not limited thereto.

In certain embodiments, the thickness or height of each layer 12A, 12B, 12C is substantially uniform or similar, although the present disclosure is not limited thereto.

In some embodiments, assembly 10 can include a plurality of first layers 12A with first visualization agent 18A (e.g., two first layers 12A; three first layers 12A; a plurality of first layers 12A; etc.), with each additional first layer 12A stacked on top of a respective first layer 12A.

Similarly, assembly 10 can include a plurality of second layers 12B with second visualization agent 18B (e.g., two second layers 12B; three second layers 12B; a plurality of second layers 12B; etc.), with each additional second layer 12B stacked on top of a respective second layer 12B.

Likewise, assembly 10 can include a plurality of third layers 12C with third visualization agent 18C (e.g., two third layers 12C; three third layers 12C; a plurality of third layers 12C; etc.), with each additional third layer 12C stacked on top of a respective third layer 12C.

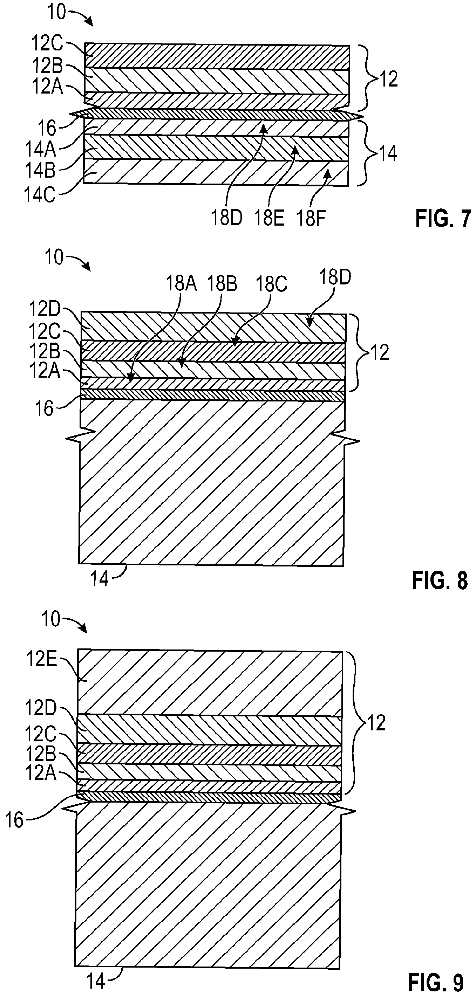

In other embodiments and as shown in FIG. 7, thermoplastic component assembly 10 can include first thermoplastic component 12 and second thermoplastic component 14, with the first thermoplastic component 12 including a first thermoplastic layer 12A of component 12, a second thermoplastic layer 12B of component 12 and a third thermoplastic layer 12C of component 12, and with the second thermoplastic component 14 including a first thermoplastic layer 14A of component 14, a second thermoplastic layer 14B of component 14 and a third thermoplastic layer 14C of component 14.

As similarly described with respect to FIG. 6, the first thermoplastic layer 12A includes a first visualization agent 18A mixed with the polymer of the first thermoplastic component 12, and the second thermoplastic layer 12B includes a second visualization agent 18B mixed with the polymer of the first thermoplastic component 12, and the third thermoplastic layer 12C includes a third visualization agent 18C mixed with the polymer of the first thermoplastic component 12.

Moreover, the first thermoplastic layer 14A of component 14 includes a fourth visualization agent 18D (e.g., fourth bright pigment 18D and/or fourth fluorescent agent 18D) mixed with the polymer of the second thermoplastic component 14, and the second thermoplastic layer 14B of component 14 includes a fifth visualization agent 18E (e.g., fifth bright pigment 18E and/or fifth fluorescent agent 18E) mixed with the polymer of the second thermoplastic component 14, and the third thermoplastic layer 14C of component 14 includes a sixth visualization agent 18F (e.g., sixth bright pigment 18F and/or sixth fluorescent agent 18F) mixed with the polymer of the second thermoplastic component 14. In certain embodiments, the fourth visualization agent 18D, the fifth visualization agent 18E and the sixth visualization agent 18F are all different from one another, although the present disclosure is not limited thereto.

In certain embodiments, the thickness or height of each layer 14A, 14B, 14C is substantially uniform or similar, although the present disclosure is not limited thereto.

In some embodiments, assembly 10 can include a plurality of first layers 14A with fourth visualization agent 18D (e.g., two first layers 14A; three first layers 14A; a plurality of first layers 14A; etc.), with each additional first layer 14A stacked on top of a respective first layer 14A.

Similarly, assembly 10 can include a plurality of second layers 14B with fifth visualization agent 18E (e.g., two second layers 14B; three second layers 14B; a plurality of second layers 14B; etc.), with each additional second layer 14B stacked on top of a respective second layer 14B.

Likewise, assembly 10 can include a plurality of third layers 14C with sixth visualization agent 18F (e.g., two third layers 14C; three third layers 14C; a plurality of third layers 14C; etc.), with each additional third layer 14C stacked on top of a respective third layer 14C.

As shown in FIG. 8, thermoplastic component assembly 10 can include first thermoplastic component 12 and second thermoplastic component 14, with the first thermoplastic component 12 including a first thermoplastic layer 12A of component 12, a second thermoplastic layer 12B of component 12, a third thermoplastic layer 12C of component 12, and a fourth thermoplastic layer 12D of component 12.

As similarly described above, the first thermoplastic layer 12A includes a first visualization agent 18A, the second thermoplastic layer 12B includes a second visualization agent 18B, the third thermoplastic layer 12C includes a third visualization agent 18C, and the fourth thermoplastic layer 12D includes a fourth visualization agent 18D (e.g., fourth bright pigment 18D and/or fourth fluorescent agent 18D) mixed with the polymer of the first thermoplastic component 12, to visually emphasize the boundary or interconnection area 16 between welded components 12, 14 (e.g., for improved visual contrast of the boundary or interconnection area 16 between welded components 12, 14). In certain embodiments, the first visualization agent 18A, the second visualization agent 18B, the third visualization agent 18C, and the fourth visualization agent 18D are all different from one another, although the present disclosure is not limited thereto.

In certain embodiments, the thickness or height of each layer 12A, 12B, 12C, 12D can vary from one another, although the present disclosure is not limited thereto.

For example and as shown in FIG. 8, the thickness of first layer 12A can be thinner or smaller than the thickness of second layer 12B, and the thickness of second layer 12B can be thinner or smaller than the thickness of third layer 12C, and the thickness of third layer 12C can be thinner or smaller than the thickness of fourth layer 12D. In this way, the layers closer to interconnection area 16 can be thinner than the layers above them.

As similarly described above, assembly 10 can include a plurality of first layers 12A with first visualization agent 18A, and/or a plurality of second layers 12B with second visualization agent 18B, and/or a plurality of third layers 12C with third visualization agent 18C, and/or a plurality of third layers 12C with third visualization agent 18C.

FIG. 9 depicts assembly 10 similar to FIG. 8, and with assembly 10 of FIG. 9 including a fifth layer 12E of component 12, with the fifth layer 12E not including a visualization agent 18. It is noted that assembly 10 can include other layers of component 12 that do not include a visualization agent 18. In this was an as depicted in FIG. 9, the fifth layer 12E (or layers) that is farthest away from interconnection area 16 may not include a visualization agent 18.

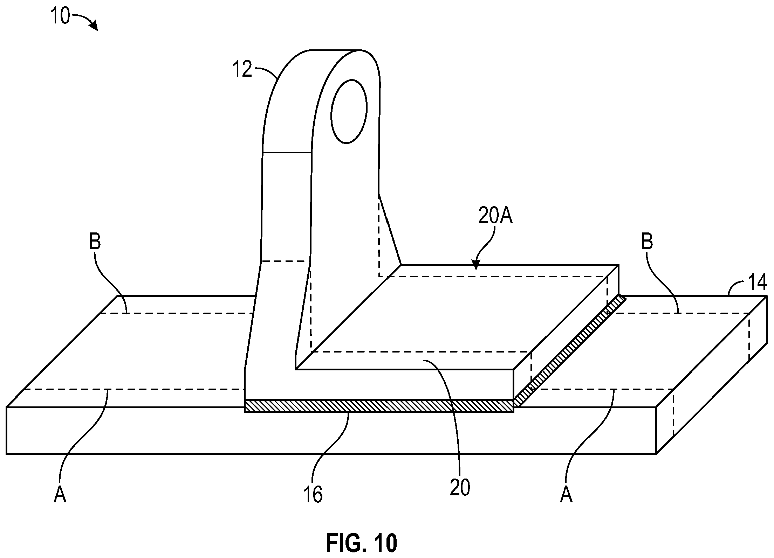

FIG. 10 is a side perspective view of another example thermoplastic component assembly 10. It is noted that the thermoplastic component assembly 10 of FIG. 10 can take the form of any of the assemblies 10 or alternative assemblies 10 discussed above with respect to FIGS. 1 to 9.

As shown in FIG. 10, assembly 10 can include a first excess portion 20 and a second excess portion 20A. In general, first and second excess portions 20, 20A each include portions of component 12 and/or 14. It is noted that assembly 10 may only include first excess portion 20 or second excess portion 20A, or may include other excess portions 20B, 20C, etc.

After welding first thermoplastic component 12 to second thermoplastic component 14, the first excess portion 20 can be cut away or removed from assembly 10 along surface A-A of FIG. 10, and the second excess portion 20 can be cut away or removed from assembly 10 along surface B-B of FIG. 10. As such, side views of the interconnection areas 16 along surfaces A-A and B-B of assembly 10 after removal of portions 20, 20A can provide for monitoring of structural behavior during operation of assembly 10 and/or under testing with applied load of assembly 10, and can provide key input on potential risks and ways for their mitigation (e.g., for interconnection areas 16 of assembly 10).

The analysis as provided by the removal of portions 20, 20A allows for accelerated development of welding technology, understanding of potential risks associated with thermoplastic welding, and overall design optimization of welded assembly 10.

There are many benefits of the assemblies, systems and methods of the present disclosure, including, without limitation: acceleration of thermoplastic product development, using welding process; clear qualitative and quantitative metrics of welding process for benchmarking and optimization; and/or the opportunity to utilize with both aircraft and non-aircraft applications/components.

While particular embodiments have been described, alternatives are possible that fall within the scope of the claims.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments.

Unless defined otherwise, technical and scientific terms used herein have the same meaning as is commonly understood by one of skill in the art to which this application belongs.

Although the systems and methods of the present disclosure have been described with reference to example embodiments thereof, the present disclosure is not limited to such example embodiments and/or implementations. Rather, the systems and methods of the present disclosure are susceptible to many implementations and applications, as will be readily apparent to persons skilled in the art from the disclosure hereof, that fall within the scope of the claims.

Since many changes could be made in the above construction and many widely different embodiments of this disclosure could be made without departing from the scope of the claims, it is intended that all matter contained in the drawings and specification shall be interpreted as illustrative and not in a limiting sense.

## Claims

1. A thermoplastic component assembly comprising:
a first thermoplastic component (12) comprising a first thermoplastic polymer material, the first thermoplastic polymer material comprising a first visualization agent; and
a second thermoplastic component (14) comprising a second thermoplastic polymer material comprising a second visualization agent;
wherein the first visualization agent and the second visualization agent are configured to operate as visual contrast under lighting conditions to identify a boundary or interconnection area (16) between the first thermoplastic component welded to the second thermoplastic component;
**characterised in that** the first visualization agent and the second visualization agent are fluorescent agents and/or dyes and absorb UV light and fluoresce in the visible spectrum.

2. The assembly of claim 1, wherein the first thermoplastic component (12) and/or the second thermoplastic component (14) is a thermoplastic-based composite component, the thermoplastic-based composite component comprising reinforcing fibers.

3. The assembly of claim 1, wherein the boundary or interconnection area (16) is a distinct monotonic, a distinct stochastic or a stochastic blurred boundary or interconnection area.

4. The assembly of claim 1, wherein the first thermoplastic component (12) comprises a first thermoplastic layer (12A) of the first thermoplastic polymer material and a second thermoplastic layer (12B) of the first thermoplastic polymer material; and
wherein the first thermoplastic layer (12A) of the first thermoplastic polymer material comprises the first visualization agent; and
wherein the second thermoplastic layer (12B) of the first thermoplastic polymer material comprises a further visualization agent, and optionally wherein the second thermoplastic component (14) comprises a first thermoplastic layer (14A) of the second thermoplastic polymer material and a second thermoplastic layer (14B) of the second thermoplastic polymer material; and
wherein the first thermoplastic layer (14A) of the second thermoplastic polymer material comprises the second visualization agent, and the second thermoplastic layer (14B) of the second thermoplastic polymer material comprises a further visualization agent.

5. The assembly of claim 4, wherein the first thermoplastic component (12) comprises a third thermoplastic layer (12C) of the first thermoplastic polymer material; and
wherein the third thermoplastic layer comprises a further visualization agent; and optionally wherein the first thermoplastic component comprises a fourth thermoplastic layer (12D) of the first thermoplastic polymer material; and
wherein the fourth thermoplastic layer is free of a visualization agent

6. The assembly of claim 5, wherein the thickness of the first thermoplastic layer (12A) is substantially uniform with the thickness of the second thermoplastic layer (12B), and the thickness of the first thermoplastic layer is substantially uniform with the thickness of the third thermoplastic layer (12C), or wherein the thickness of the first thermoplastic layer (12A) is less than the thickness of the second thermoplastic layer (12B), and the thickness of the second thermoplastic layer is less than the thickness of the third thermoplastic layer (12C).

7. The assembly of claim 1, wherein the first thermoplastic component comprises (12) a plurality of first thermoplastic layers of the first thermoplastic polymer material with the first visualization agent; and
wherein the first thermoplastic component (12) comprises a plurality of second thermoplastic layers of the first thermoplastic polymer material with a further visualization agent.

8. A characterization method comprising:
providing a first thermoplastic component (12) comprising a first thermoplastic polymer material, the first thermoplastic polymer material comprising a first visualization agent and
providing a second thermoplastic component (14) comprising a second thermoplastic polymer material comprising a second visualization agent;
welding the first thermoplastic component (12) to the second thermoplastic component (14); and
subjecting the welded first and second thermoplastic components to a UV light source, with the first visualization agent and the second visualization agent being fluorescent agents and/or dyes and absorbing UV light and fluorescing in the visible spectrum to identify a boundary or interconnection area (16) between the first thermoplastic component (12) welded to the second thermoplastic component (14).

9. The method of claim 8, wherein the the boundary or interconnection area (16) is a distinct monotonic, a distinct stochastic or a stochastic blurred boundary or interconnection area.

10. The method of any of claims 8 and 9, further comprising:
removing a first excess portion (20) of the first and second thermoplastic components along a first removal surface after welding the first thermoplastic component to the second thermoplastic component.

11. The method of claim 10 further comprising removing a second excess portion (20A) of the first and second thermoplastic components along a second removal surface; and
subjecting the welded first and second thermoplastic components along the second removal surface to the light source, with the first visualization agent and the second visualization agent operating as visual contrast under the light source to identify the boundary or interconnection area between the first thermoplastic component welded to the second thermoplastic component.

12. The method of any of claims 8 to 11, wherein the first thermoplastic component or the second thermoplastic component is a thermoplastic-based composite component, the thermoplastic-based composite component comprising reinforcing fibers.

## Patentansprüche

1. Thermoplastische Komponentenbaugruppe, umfassend:
eine erste thermoplastische Komponente (12), umfassend ein erstes thermoplastisches Polymermaterial, wobei das erste thermoplastische Polymermaterial ein erstes Visualisierungsmittel umfasst; und
eine zweite thermoplastische Komponente (14), umfassend ein zweites thermoplastisches Polymermaterial, umfassend ein zweites Visualisierungsmittel;
wobei das erste Visualisierungsmittel und das zweite Visualisierungsmittel konfiguriert sind, um unter Lichtbedingungen als visueller Kontrast zu fungieren, um einen Grenz- oder Verbindungsbereich (16) zwischen der ersten thermoplastischen Komponente, die mit der zweiten thermoplastischen Komponente verschweißt ist, zu identifizieren;
**dadurch gekennzeichnet, dass** das erste Visualisierungsmittel und das zweite Visualisierungsmittel fluoreszierende Mittel und/oder Farbstoffe sind und UV-Licht absorbieren und in dem sichtbaren Spektrum fluoreszieren.

2. Baugruppe nach Anspruch 1, wobei die erste thermoplastische Komponente (12) und/oder die zweite thermoplastische Komponente (14) eine Verbundkomponente auf Thermoplastbasis ist, wobei die Verbundkomponente auf Thermoplastbasis Verstärkungsfasern umfasst.

3. Baugruppe nach Anspruch 1, wobei der Grenz- oder Verbindungsbereich (16) ein ausgeprägt monotoner, ein ausgeprägt stochastischer oder ein stochastisch verschwommener Grenz- oder Verbindungsbereich ist.

4. Baugruppe nach Anspruch 1, wobei die erste thermoplastische Komponente (12) eine erste thermoplastische Schicht (12A) aus dem ersten thermoplastischen Polymermaterial und eine zweite thermoplastische Schicht (12B) aus dem ersten thermoplastischen Polymermaterial umfasst; und
wobei die erste thermoplastische Schicht (12A) aus dem ersten thermoplastischen Polymermaterial das erste Visualisierungsmittel umfasst; und
wobei die zweite thermoplastische Schicht (12B) aus dem ersten thermoplastischen Polymermaterial ein weiteres Visualisierungsmittel umfasst und wobei optional die zweite thermoplastische Komponente (14) eine erste thermoplastische Schicht (14A) aus dem zweiten thermoplastischen Polymermaterial und eine zweite thermoplastische Schicht (14B) aus dem zweiten thermoplastischen Polymermaterial umfasst; und
wobei die erste thermoplastische Schicht (14A) aus dem zweiten thermoplastischen Polymermaterial das zweite Visualisierungsmittel umfasst und die zweite thermoplastische Schicht (14B) aus dem zweiten thermoplastischen Polymermaterial ein weiteres Visualisierungsmittel umfasst.

5. Baugruppe nach Anspruch 4, wobei die erste thermoplastische Komponente (12) eine dritte thermoplastische Schicht (12C) aus dem ersten thermoplastischen Polymermaterial umfasst; und wobei die dritte thermoplastische Schicht ein weiteres Visualisierungsmittel umfasst; und wobei optional die erste thermoplastische Komponente eine vierte thermoplastische Schicht (12D) aus dem ersten thermoplastischen Polymermaterial umfasst; und
wobei die vierte thermoplastische Schicht frei von einem Visualisierungsmittel ist.

6. Baugruppe nach Anspruch 5, wobei die Dicke der ersten thermoplastischen Schicht (12A) im Wesentlichen gleich der Dicke der zweiten thermoplastischen Schicht (12B) ist und die Dicke der ersten thermoplastischen Schicht im Wesentlichen gleich der Dicke der dritten thermoplastischen Schicht (12C) ist oder wobei die Dicke der ersten thermoplastischen Schicht (12A) geringer ist als die Dicke der zweiten thermoplastischen Schicht (12B) und die Dicke der zweiten thermoplastischen Schicht geringer ist als die Dicke der dritten thermoplastischen Schicht (12C).

7. Baugruppe nach Anspruch 1, wobei die erste thermoplastische Komponente (12) eine Vielzahl von ersten thermoplastischen Schichten aus dem ersten thermoplastischen Polymermaterial mit dem ersten Visualisierungsmittel umfasst; und
wobei die erste thermoplastische Komponente (12) eine Vielzahl von zweiten thermoplastischen Schichten aus dem ersten thermoplastischen Polymermaterial mit einem weiteren Visualisierungsmittel umfasst.

8. Charakterisierungsverfahren, umfassend:
Bereitstellen einer ersten thermoplastischen Komponente (12), umfassend ein erstes thermoplastisches Polymermaterial, wobei das erste thermoplastische Polymermaterial ein erstes Visualisierungsmittel umfasst; und
Bereitstellen einer zweiten thermoplastischen Komponente (14), umfassend ein zweites thermoplastisches Polymermaterial, umfassend ein zweites Visualisierungsmittel;
Verschweißen der ersten thermoplastischen Komponente (12) mit der zweiten thermoplastischen Komponente (14); und
Aussetzen der verschweißten ersten und zweiten thermoplastischen Komponente einer UV-Lichtquelle, wobei das erste Visualisierungsmittel und das zweite Visualisierungsmittel fluoreszierende Mittel und/oder Farbstoffe sind und UV-Licht absorbieren und in dem sichtbaren Spektrum fluoreszieren, um einen Grenz- oder Verbindungsbereich (16) zwischen der ersten thermoplastischen Komponente (12), die mit der zweiten thermoplastischen Komponente (14) verschweißt ist, zu identifizieren.

9. Baugruppe nach Anspruch 8, wobei der Grenz- oder Verbindungsbereich (16) ein ausgeprägt monotoner, ein ausgeprägt stochastischer oder ein stochastisch verschwommener Grenz- oder Verbindungsbereich ist.

10. Verfahren nach einem der Ansprüche 8 und 9, ferner umfassend: Entfernen eines ersten überschüssigen Abschnitts (20) der ersten und zweiten thermoplastischen Komponente entlang einer ersten Entfernungsoberfläche nach dem Verschweißen der ersten thermoplastischen Komponente mit der zweiten thermoplastischen Komponente.

11. Verfahren nach Anspruch 10, ferner umfassend ein Entfernen eines zweiten überschüssigen Abschnitts (20A) der ersten und zweiten thermoplastischen Komponente entlang einer zweiten Entfernungsoberfläche; und
Aussetzen der verschweißten ersten und zweiten thermoplastischen Komponente entlang der zweiten Entfernungsoberfläche der Lichtquelle, wobei das erste Visualisierungsmittel und das zweite Visualisierungsmittel als visueller Kontrast unter der Lichtquelle fungieren, um den Grenz- oder Verbindungsbereich zwischen der ersten thermoplastischen Komponente, die mit der zweiten thermoplastischen Komponente verschweißt ist, zu identifizieren.

12. Verfahren nach einem der Ansprüche 8 bis 11, wobei die erste thermoplastische Komponente oder die zweite thermoplastische Komponente eine Verbundkomponente auf Thermoplastbasis ist, wobei die Verbundkomponente auf Thermoplastbasis Verstärkungsfasern umfasst.

## Revendications

1. Ensemble de composants thermoplastiques comprenant :
un premier composant thermoplastique (12) comprenant un premier matériau polymère thermoplastique, le premier matériau polymère thermoplastique comprenant un premier agent de visualisation ; et
un second composant thermoplastique (14) comprenant un second matériau polymère thermoplastique comprenant un second agent de visualisation ;
dans lequel le premier agent de visualisation et le second agent de visualisation sont configurés pour fonctionner comme contraste visuel dans des conditions d'éclairage pour identifier une zone de limite ou d'interconnexion (16) entre le premier composant thermoplastique soudé au second composant thermoplastique ;
**caractérisé en ce que** le premier agent de visualisation et le second agent de visualisation sont des agents fluorescents et/ou des colorants et absorbent la lumière UV et fluorescent dans le spectre visible.

2. Ensemble selon la revendication 1, dans lequel le premier composant thermoplastique (12) et/ou le second composant thermoplastique (14) est un composant composite à base thermoplastique, le composant composite à base thermoplastique comprenant des fibres de renforcement.

3. Ensemble selon la revendication 1, dans lequel la zone de limite ou d'interconnexion (16) est une zone de limite ou d'interconnexion monotone distincte, stochastique distincte ou floue stochastique.

4. Ensemble selon la revendication 1, dans lequel le premier composant thermoplastique (12) comprend une première couche thermoplastique (12A) du premier matériau polymère thermoplastique et une deuxième couche thermoplastique (12B) du premier matériau polymère thermoplastique ; et
dans lequel la première couche thermoplastique (12A) du premier matériau polymère thermoplastique comprend le premier agent de visualisation ; et
dans lequel la deuxième couche thermoplastique (12B) du premier matériau polymère thermoplastique comprend un agent de visualisation supplémentaire, et éventuellement dans lequel le second composant thermoplastique (14) comprend une première couche thermoplastique (14A) du second matériau polymère thermoplastique et une deuxième couche thermoplastique (14B) du second matériau polymère thermoplastique ; et
dans lequel la première couche thermoplastique (14A) du second matériau polymère thermoplastique comprend le second agent de visualisation, et la deuxième couche thermoplastique (14B) du second matériau polymère thermoplastique comprend un autre agent de visualisation.

5. Ensemble selon la revendication 4, dans lequel le premier composant thermoplastique (12) comprend une troisième couche thermoplastique (12C) du premier matériau polymère thermoplastique ; et
dans lequel la troisième couche thermoplastique comprend un autre agent de visualisation ; et éventuellement dans lequel le premier composant thermoplastique comprend une quatrième couche thermoplastique (12D) du premier matériau polymère thermoplastique ; et
dans lequel la quatrième couche thermoplastique est exempte d'agent de visualisation.

6. Ensemble selon la revendication **5,** dans lequel l'épaisseur de la première couche thermoplastique (12A) est sensiblement uniforme avec l'épaisseur de la deuxième couche thermoplastique (12B), et l'épaisseur de la première couche thermoplastique est sensiblement uniforme avec l'épaisseur de la troisième couche thermoplastique (12C), ou dans lequel l'épaisseur de la première couche thermoplastique (12A) est inférieure à l'épaisseur de la deuxième couche thermoplastique (12B), et l'épaisseur de la deuxième couche thermoplastique est inférieure à l'épaisseur de la troisième couche thermoplastique (12C).

7. Ensemble selon la revendication **1,** dans lequel le premier composant thermoplastique (12) comprend une pluralité de premières couches thermoplastiques du premier matériau polymère thermoplastique avec le premier agent de visualisation ; et dans lequel le premier composant thermoplastique (12) comprend une pluralité de deuxièmes couches thermoplastiques du premier matériau polymère thermoplastique avec un autre agent de visualisation.

8. Procédé de caractérisation comprenant :
la fourniture d'un premier composant thermoplastique (12) comprenant un premier matériau polymère thermoplastique, le premier matériau polymère thermoplastique comprenant un premier agent de visualisation et
la fourniture d'un second composant thermoplastique (14) comprenant un second matériau polymère thermoplastique comprenant un second agent de visualisation ;
le soudage du premier composant thermoplastique (12) au second composant thermoplastique (14) ; et
la soumission des premier et second composants thermoplastiques soudés à une source de lumière UV, le premier agent de visualisation et le second agent de visualisation étant des agents fluorescents et/ou des colorants et absorbant la lumière UV et fluorescent dans le spectre visible pour identifier une zone de limite ou d'interconnexion (16) entre le premier composant thermoplastique (12) soudé au second composant thermoplastique (14).

9. Procédé selon la revendication 8, dans lequel la zone de limite ou d'interconnexion (16) est une zone de limite ou d'interconnexion monotone distincte, stochastique distincte ou floue stochastique.

10. Procédé selon l'une quelconque des revendications 8 et **9,** comprenant également :
le retrait d'une première partie excédentaire (20) des premier et second composants thermoplastiques le long d'une première surface de retrait après avoir soudé le premier composant thermoplastique au second composant thermoplastique.

11. Procédé selon la revendication 10, comprenant également le retrait d'une seconde partie excédentaire (20A) des premier et second composants thermoplastiques le long d'une seconde surface de retrait ; et
la soumission des premier et second composants thermoplastiques soudés le long de la seconde surface de retrait à la source de lumière, le premier agent de visualisation et le second agent de visualisation fonctionnant comme contraste visuel sous la source de lumière pour identifier la zone de limite ou d'interconnexion entre le premier composant thermoplastique soudé au second composant thermoplastique.

12. Procédé selon l'une quelconque des revendications 8 à 11, dans lequel le premier composant thermoplastique ou le second composant thermoplastique est un composant composite à base thermoplastique, le composant composite à base thermoplastique comprenant des fibres de renforcement.
